# EUROPEAN PATENT APPLICATION

(11) **EP 4 459 820 A1**
(43) Date of publication of application: **06.11.2024**
(21) Application number: 23171279.5
(22) Date of filing: 03.05.2023
(51) Int. Cl.: H02J 1/10, H02J 9/04, H02J 9/06

(54) **SYSTEM AND METHOD FOR ELECTROLYSIS PLANT INTERCONNECTED TO RENEWABLE ENERGY POWER SOURCE AND POWER GRID**

(71) Applicant: Siemens Energy Global GmbH & Co. KG, 81739 München (DE)
(72) Inventor: Schumann, Sven, 91452 Wilhermsdorf (DE); Wolf, Erik, 91341 Röttenbach (DE)

(57) **Abstract**

System and method for electrolysis plant interconnected to renewable energy power source (22) and power grid (20) are provided. The system includes the power source (22) and an electrolysis plant (30) including electrolyzers (32) connected to the power source (22) to energize the electrolyzers into respective operating conditions. A control system (40) is connected to source (22) and to grid (20). Upon detection of power outage or otherwise insufficient power supply by the renewable power source, the control system is configured to bring the electrolyzers into respective standby conditions. The electrolyzers are connected to the grid to energize the electrolyzers into the standby conditions. Optionally, a backup power supply (26) is connected to the control system so that upon detection of concurrent power outages or otherwise insufficient concurrent power supply by the renewable power source and the power grid, the backup power supply is configured to energize the control system.

## Description

### BACKGROUND

Disclosed embodiments relate generally to the field of renewable energy, and, more particularly, to system and method for an electrolysis plant interconnected to a renewable energy power source and a power grid.

Hydrogen is a clean fuel that, for example, when consumed in a fuel cell, can be used to cleanly and efficiently produce electricity. At least such qualities make hydrogen an attractive fuel option for various applications, such as electric power generation, transportation, etc. The production of hydrogen can be realized through various production techniques, each involving a primary source of energy. For example, green hydrogen is hydrogen produced by splitting water molecules by electrolysis using renewable energy sources, such as wind turbines, photovoltaic systems, etc., rather than using, for example, natural gas, which can result in substantial amounts of CO2 emissions. Because of its positive impact to our planet's ecosystem, it is expected that the demand of green hydrogen will increase and in turn green hydrogen will command relatively higher prices in energy markets compared to, for example, hydrogen produced from non-renewable sources.

The production of hydrogen through water electrolysis in an electrolysis plant energized from renewable energy sources, is a promising pathway to facilitate decarbonizing the energy sector. Often, availability of power from renewable power sources is hard to predict. When power from a renewable power source is interrupted, there is a need to provide reliable and cost-effective solutions, such as may involve providing auxiliary power from an alternative power source in a way to at least ensure safe transitioning of systems (e.g., electrolyzers) in the electrolysis plant from respective operating conditions to respective standby conditions, for example.

### BRIEF SUMMARY

In one aspect, a system includes a renewable energy electrical power source and an electrolysis plant including a plurality of electrolyzers electrically coupled to the renewable energy electrical power source to energize respective ones of the plurality of electrolyzers in respective operating conditions. The system further includes a control system of the electrolysis plant connected in parallel circuit to the renewable energy electrical power source and to a power grid. Upon detection of an occurrence of power outage or otherwise insufficient power supply by the renewable energy electrical power source, the control system is energized by the power grid. The control system is configured to bring the respective ones of the plurality of electrolyzers to respective standby conditions. The plurality of electrolyzers is electrically coupled to the power grid to energize the respective ones of the plurality of electrolyzers in the respective standby conditions.

In another aspect, a method allows electrically coupling an electrolysis plant including a plurality of electrolyzers to a renewable energy electrical power source to energize respective ones of the plurality of electrolyzers in respective operating conditions. A control system of the electrolysis plant is connected in parallel circuit to the renewable energy electrical power source and to a power grid. The method allows detecting occurrence of a power outage or otherwise insufficient power supply by the renewable energy electrical power source. Upon detecting the occurrence of the power outage or the otherwise insufficient power supply by the renewable energy electrical power source, energizing with the power grid the control system and controlling, by way of the control system, the respective ones of the plurality of electrolyzers to be brought to respective standby conditions. The plurality of electrolyzers is electrically coupled to the power grid to energize the respective ones of the plurality of electrolyzers in the respective standby conditions.

The foregoing has broadly outlined some of the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Also, before undertaking the Detailed Description below, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

FIG. 1 is a block diagram representation showing one non-limiting example of a disclosed system connected to a renewable energy electrical power source and to a power grid.
FIG. 2 is a block diagram representation showing another non-limiting example of a disclosed system further including a backup power supply.
FIG. 3 is a block diagram representation showing yet another non-limiting example of a disclosed system.
FIG. 4 is a flow chart showing example steps in connection with one example embodiment of a disclosed method.
FIGs. 5 through 7 respectively show further example steps in connection with the disclosed method.

### DETAILED DESCRIPTION

The present inventors have recognized the importance of providing cost-effective and reliable solutions, such as may be used without limitation for applications involving hydrogen production, where renewable power sources may be arranged to form a renewable power plant and electrolyzers may be arranged to form an electrolysis plant. In one disclosed embodiment, the electrolysis plant is normally powered for hydrogen production by the renewable power plant. As elaborated in greater detail below, connectivity to a power grid and/or to a back-up power supply are available to ensure the electrolysis plant can be brough to a safe condition, such as when there is a power outage or otherwise there is insufficient power supply by the renewable power plant.

As noted above, availability of power from renewable power sources often is hard to predict based on numerous factors, such as during conditions involving little or no wind in the case of wind turbines, or during conditions involving no solar light in the case of photovoltaic systems. Power from the renewable energy power sources could also be interrupted due to their own technical malfunctions, etc. Therefore, the present inventors have further recognized the need of a solution that ensures a control system of the electrolysis plant to continue being appropriately supplied with auxiliary power to, for example, be able to halt operation of the electrolysis plant in a safe and reliable manner, notwithstanding the occurrence of any such conditions where power from the renewable power plant is not sufficient to run the electrolysis plant. In certain implementations, the auxiliary power is supplied by the power grid. In other implementations, the auxiliary power is supplied by the power grid, the backup power supply or both.

At least in view of the foregoing considerations, the present inventors disclose embodiments of system and method designed to provide reliable and cost-effective solutions, such as may involve providing auxiliary power from an alternative power source in a way to at least ensure safe transitioning of systems in the electrolysis plant from respective operating conditions to respective standby conditions, or to respective idle conditions, for example.

In one application, where, for example, the electrolysis plant is part of a hydrogen production plant, in an operating condition (or state) the input power to any given electrolyzer can range from a minimum partial operation (typically about 10% of the electrolyzer's rated power) to full load operation. In this state, the electrolyzer produces hydrogen with a near-constant efficiency value. When the electrolyzers transition to respective standby conditions there is no hydrogen production, but some moderate level of electricity consumption is involved to maintain, for example, a specific temperature and pressure within the electrolyzers. By way of comparison, when the electrolyzers are in respective idle conditions, the electrolyzers are turned off (e.g., shutdown condition). That is, the electrolyzers would be depressurized and cold. In the idle condition, just very low power consumption, such as for control units and anti-freezing systems (if applicable given the location of the plant), would be involved and thus the power consumption is much lower than that involved to keep the electrolyzers in their respective standby conditions. The foregoing are just non-limiting examples of certain conditions or states through which the electrolyzers should be able to transition in a safe and reliable manner, notwithstanding the occurrence of conditions where power from the renewable power plant is not sufficient to run the electrolysis plant.

Before disclosed embodiments are explained in detail, it is to be understood that disclosed embodiments are not limited in their application to the details of construction and the arrangement of components set forth in this description or illustrated in the following drawings. Disclosed embodiments are capable of being practiced or of being carried out in various ways. Also, it is to be understood that the phraseology and terminology used herein is for the purpose of description and should not be regarded as limiting.

Various technologies that pertain to disclosed embodiments will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

It is noted that while the instant disclosure includes a description in the context of a fully functional system and/or a series of acts, those skilled in the art will appreciate that at least portions of the mechanism of the present disclosure and/or described acts may be capable of being distributed in the form of computer/processor executable instructions (e.g., software/firmware applications) contained within a storage device that corresponds to a non-transitory machine-usable, computer-usable, or computer-readable medium in any of a variety of forms (e.g., flash memory, SSD, hard drive). The computer/processor executable instructions may include a routine, a subroutine, programs, applications, modules, libraries, and/or the like. Further, it should be appreciated that computer/processor executable instructions may correspond to and/or may be generated from source code, byte code, runtime code, machine code, assembly, Java, JavaScript, Python, Rust, Swift, Go, C, C#, C++ or any other form of code that can be programmed/configured to cause at least one processor to carry out the acts and features described herein. Still further, results of the described/claimed processes or functions may be stored in a computer-readable medium, displayed on a display device, and/or the like.

It should be appreciated that acts associated with the above-described methodologies, features, and functions (other than any described manual acts) may be carried out by one or more data processing systems via operation of one or more of the processors. Thus, it is to be understood that when referring to a data processing system or control system such a system may be implemented across several data processing systems organized in a distributed system in communication with each other directly or via a network.

As used herein a processor or processor module corresponds to any electronic device that is configured via hardware circuits, software, and/or firmware to process data. For example, processors described herein may correspond to one or more (or a combination) of a microprocessor, CPU, or any other integrated circuit (IC) or other type of circuit that is capable of processing data in a data processing system. As discuss previously, the processor that is described or claimed as being configured to carry out a particular described/claimed process or function may correspond to a CPU that executes computer/processor executable instructions stored in a memory in the form of software to carry out such a described/claimed process or function. However, it should also be appreciated that such a processor may correspond to an IC that is hardwired with processing circuitry (e.g., an FPGA or ASIC IC) to carry out such a described/claimed process or function. Also, it should be understood, that reference to a processor may include multiple physical processors or cores that are configured to carry out the functions described herein. In addition, it should be appreciated that a data processing system and/or a processor may correspond to a controller that is operably configured to control at least one operation including a programable logic controller (PLC).

In addition, it should also be understood that a processor or processor module that is described or claimed as being configured to carry out a particular described/claimed process or function may correspond to the combination of the processor with the executable instructions (e.g., software/firmware applications) loaded/installed into the described memory (volatile and/or non-volatile), which are currently being executed and/or are available to be executed by the processor to cause the processor to carry out the described/claimed process or function. Thus, a processor that is powered off or is executing other software, but has the described software loaded/stored in a storage device in operative connection therewith (such as in a flash memory, SSD, or hard drive) in a manner that is available to be executed by the processor (when started by a user, hardware and/or other software), may also correspond to the described/claimed processor that is operably configured to carry out the particular processes and functions described/claimed herein.

Those of ordinary skill in the art will appreciate that hardware and software depicted in connection with disclosed embodiments may vary for particular implementations. The depicted examples are provided for the purpose of explanation only and are not meant to imply architectural limitations with respect to the present disclosure. Also, those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of the data processing system may conform to any of the various current implementations and practices known in the art.

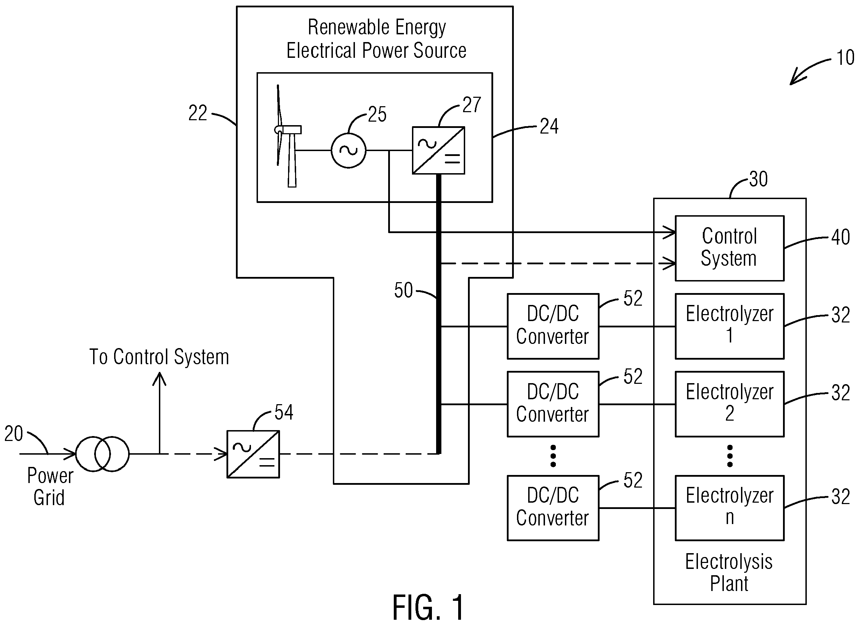

FIG. 1 is a block diagram representation showing one non-limiting example of a disclosed system 10 connected to a power grid 20, which can be, but need not be, the power grid of a region or of a nation. For example, in certain implementations, power grid 20 can be a weak power grid compared to the overall power requirements to run the electrolysis plant. By way of example, a weak power grid in this context is a grid that lacks sufficient power, short-circuit power or otherwise is considered insufficient in any other regard to appropriately energize the electrolyzers 32 into their respective operating conditions but has sufficient power to, for example, appropriately energize the electrolyzers 32 into respective standby conditions.

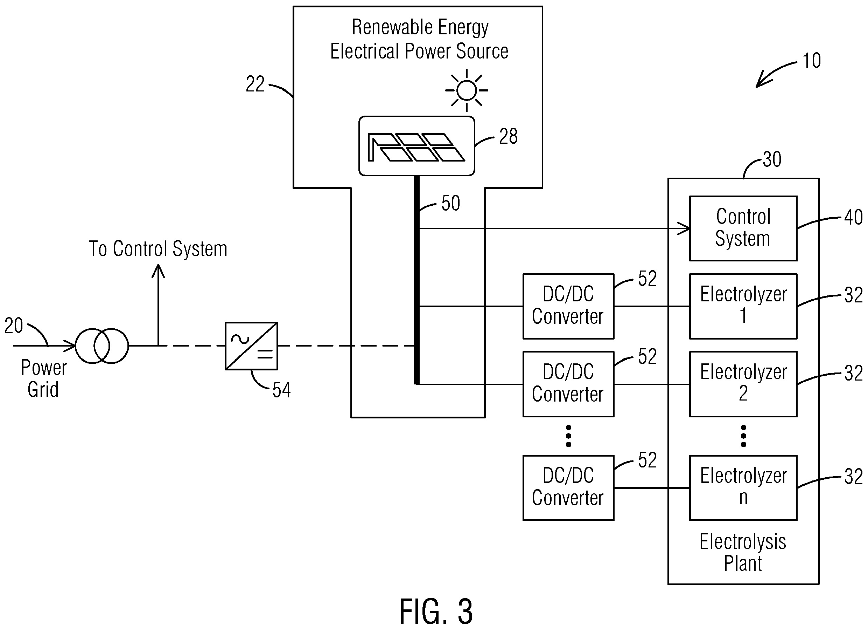

System 10 includes a renewable energy electrical power source 22 that in one embodiment may be a wind turbine system 24. In certain embodiments, renewable energy electrical power source 22 may be a solar photovoltaic system 28, as shown in FIG. 3. It is contemplated that in certain applications, renewable energy electrical power source 22 could be a hybrid renewable energy electrical power source, such as a combination of a wind turbine system, a solar photovoltaic system or any other non-fossil-fuel based power system.

System 10 further includes an electrolysis plant 30 that includes a plurality of electrolyzers 32 electrically coupled to renewable energy electrical power source 22 to energize respective ones of the plurality of electrolyzers 32 to respective operating conditions or states.

In one example embodiment, a control system 40 of electrolysis plant 30 is connected in parallel circuit to renewable energy electrical power source 22 and to power grid 20. In the event a power outage or otherwise insufficient power supply is detected in the renewable energy electrical power source 22, control system 40 is energized by the power grid. Control system 40 is configured to bring the respective ones of the plurality of electrolyzers 32 to respective standby conditions. In one example embodiment, the plurality of electrolyzers 32 is electrically coupled to the power grid 20 to energize the respective ones of the plurality of electrolyzers 32 in the respective standby conditions. The dashed lines in FIG.s 1 through 3 schematically represent non-limiting examples of certain electrical connections that may be optionally implemented depending on the specific needs of a given implementation.

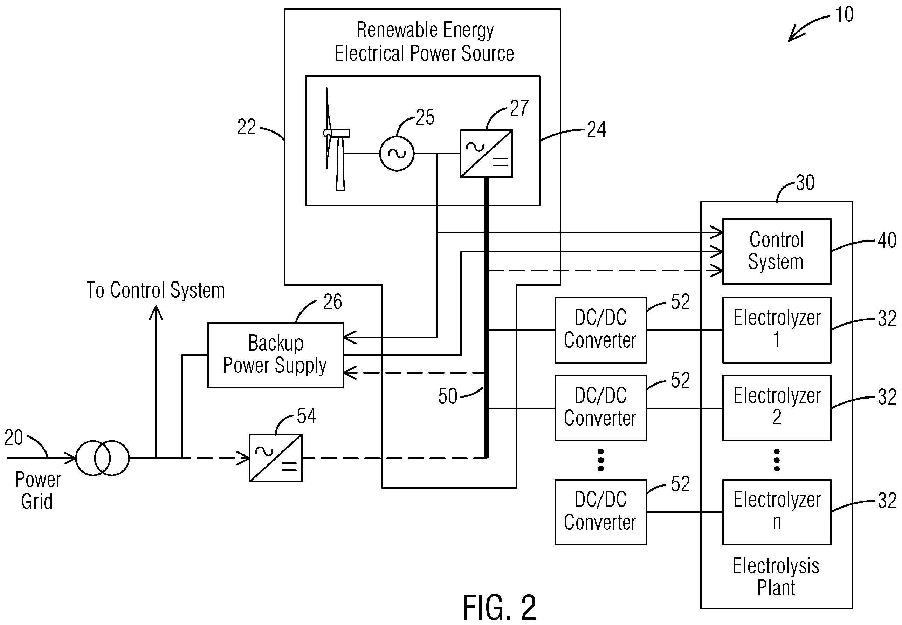

FIG. 2 is a block diagram representation showing another non-limiting example of a disclosed system 10. In this embodiment, a backup power supply 26, such as a battery backup power supply, fuel cell system or both, is electrically coupled to control system 40. Backup power supply 26 is configured to energize control system 40 in the event of concurrent power outages or otherwise insufficient concurrent power supply is detected in the renewable energy electrical power source 22 and the power grid 20.

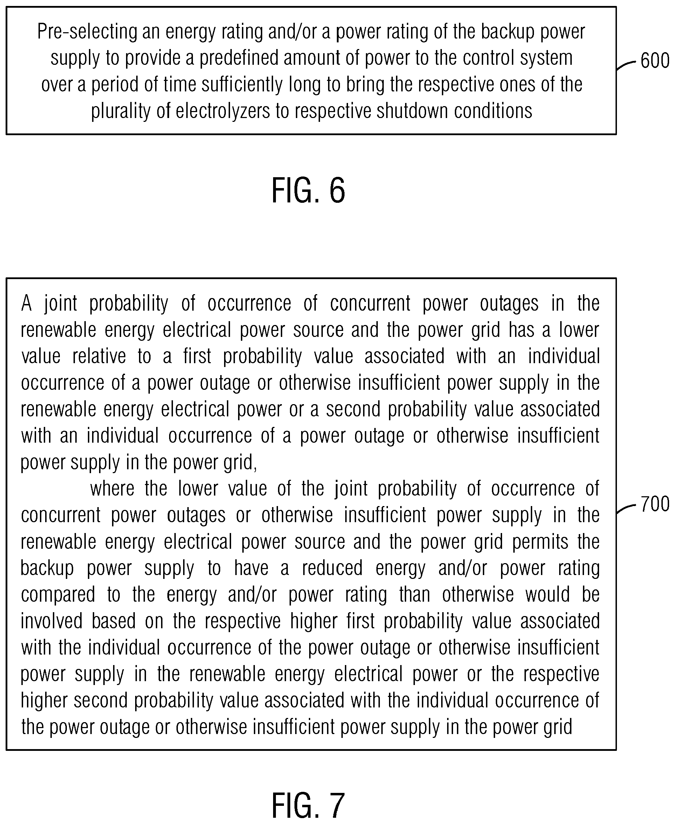

In one example embodiment, as described in block 600 of FIG. 6, backup power supply 26 is pre-selected with an energy rating and/or power rating to provide a predefined amount of power to control system 40 over a period of time sufficiently long to bring the respective ones of the plurality of electrolyzers to respective idle conditions. In one example embodiment, such as involving a battery backup power supply, the duration of time is in a range from approximately 7 minutes to approximately 15 minutes.

In one example embodiment, as described in block 700 of FIG. 7, a joint probability of occurrence of concurrent power outages or otherwise insufficient concurrent power supply in the renewable energy electrical power source 22 and the power grid 20 has a lower value relative to a first probability value associated with an individual occurrence of a power outage or otherwise insufficient power supply by the renewable energy electrical power source 22 or relative to a second probability value associated with an individual occurrence of a power outage or otherwise insufficient power supply by the power grid 20.

As further described in block 700 of FIG. 7, the lower value of the joint probability of the occurrence of concurrent power outages or the otherwise insufficient concurrent power supply in the renewable energy electrical power source and the power grid, advantageously permits pre-selecting the backup power supply with a lower energy rating and/or power rating compared to the energy rating and/or power rating that otherwise would be involved based on the higher first probability associated with the individual occurrence of a power outage or otherwise insufficient power supply by the renewable energy electrical power or based on the higher second probability associated with the individual occurrence of a power outage or otherwise insufficient power supply in the power grid. Accordingly, disclosed embodiments are conducive to an implementation that permits cost and space savings, compared to designs involving, for example, a high-capacity Uninterruptible Power Supply (UPS) system, as is generally the case in certain known implementations.

Returning to FIG. 1, in one example embodiment, system 10 includes a DC power bus 50 (also shown in FIGs. 2 and 3) electrically powered by the renewable energy electrical power source 22. In one example embodiment, DC power bus 50 is connected to supply DC power to respective DC to DC power converters 52 configured to energize the respective ones of the plurality of electrolyzers in the respective operating conditions. It will be appreciated that the foregoing implementation involving a DC bus is just one example implementation to distribute power to the electrolyzers. For example, in certain implementations in lieu of the DC bus, AC power, such as from an AC power generator 25 in wind turbine system 24, can be distributed to the electrolyzers by way of an AC bus with appropriate power rectifiers connected to the AC bus. Accordingly, the technical advantages of disclosed embodiments are in no way limited by the modality of the power bus used to distribute power to the electrolyzers of electrolysis plant 30.

In one example embodiment, system 10 includes an AC to DC power converter 54 connected to receive AC power from the power grid 20. In one example embodiment, DC power bus 50 is connected to receive DC output power from AC to DC power converter 54 to energize the respective ones of the plurality of electrolyzers in the standby condition in the event of the power outage in the renewable energy electrical power source. In one example embodiment, control system 40 is connected to receive AC power from power grid 20 in the event of the power outage in the renewable energy electrical power source 22.

As noted above, wind turbine system 24 includes AC power generator 25, and in one example embodiment control system 40 is connected to receive AC power from AC power generator 25. Wind turbine system further includes an AC to DC power converter 27 connected to receive AC power from AC power generator 25, and DC power bus 50 is connected to receive DC output power from the AC to DC power converter 27 of wind turbine system 24. In certain implementations, a power supply system of electrolysis plant 30 can alternatively include the AC to DC power converter 27 connected to receive AC power from AC power generator 25. In one example embodiment, control system 40 is connected to receive DC power from DC bus 50.

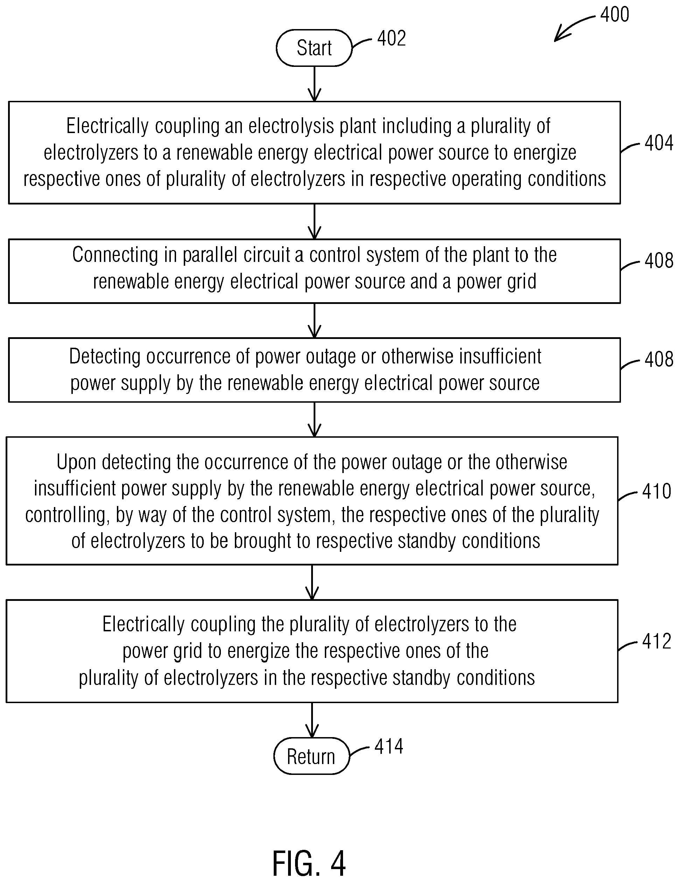

FIG. 4 is a flow chart 400 depicting example steps (e.g., involving structural and/or operational relationships) in connection with one example embodiment of a disclosed method in the context of a system, such as disclosed above in the context of FIGs. 1 through 3.

Subsequent to a start step 402, step 404 allows electrically coupling an electrolysis plant comprising a plurality of electrolyzers to a renewable energy electrical power source to energize respective ones of the plurality of electrolyzers in respective operating conditions. Step 406 allows connecting in parallel circuit a control system of the electrolysis plant to the renewable energy electrical power source and to a power grid. Step 408 allows detecting occurrence of a power outage or otherwise insufficient power supply by the renewable energy electrical power source. Step 410 allows energizing with the power grid the control system and controlling, by way of the control system, the respective ones of the plurality of electrolyzers to be brought to respective standby conditions upon detecting occurrence of the power outage or the otherwise insufficient power supply by the renewable energy electrical power source. Prior to a return step 414, step 412 allows electrically coupling the plurality of electrolyzers to the power grid to energize the respective ones of the plurality of electrolyzers in the respective standby conditions.

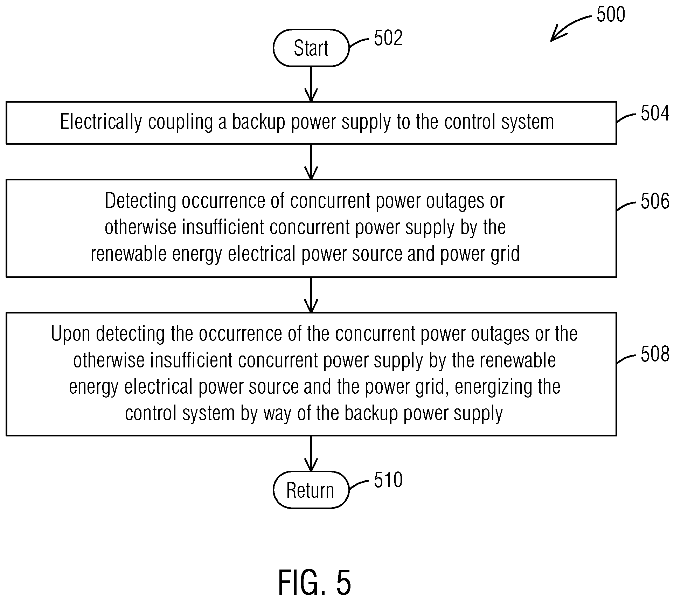

FIG. 5 is a flow chart 500 depicting further example steps (e.g., involving further structural and/or operational relationships) in connection with one example embodiment of a disclosed method in the context of system, such as disclosed above in the context of FIG. 2.

Subsequent to a start step 502, step 504 allows electrically coupling a backup power supply to the control system. Examples of backup power supply may be a battery backup power supply, fuel cell system or both. Step 506 allows detecting occurrence of concurrent power outages or otherwise insufficient concurrent power supply by the renewable energy electrical power source and the power grid. Prior to a return step 510, upon detecting the occurrence of the concurrent power outages or otherwise insufficient concurrent power supply by the renewable energy electrical power source and the power grid, step 508 allows energizing, by way of the backup power supply, the control system.

In one example embodiment, the method allows pre-selecting an energy rating and/or power rating of the backup power supply to provide a predefined amount of power to the control system over a period of time sufficiently long to bring the respective ones of the plurality of electrolyzers to respective idle conditions. In one example embodiment, where the backup power supply is a battery backup power supply, the period of time is in a range from approximately 7 minutes to approximately 15 minutes.

In operation, disclosed embodiments are effective to provide cost-effective and reliable technical solutions in applications where a renewable energy power source and an electrolysis plant are connected to each other and where connectivity to a power grid is available but the power grid may not be connected or may be connected but lacks sufficient power to operate the electrolysis plant without additional local power generation.

In operation, disclosed embodiments are designed to ensure that a control system of the electrolysis plant is reliably powered to bring electrolizers in the electrolysis plant to an appropriate state or condition, such as a standby condition or an idle condition notwithstanding the occurrence of any such conditions where power from the renewable power plant is not sufficient to run (e.g., operate) the electrolysis plant.

In operation, disclosed embodiments permit connecting the control system in parallel circuit to the renewable energy power source and the power grid, and, optionally to a backup power supply, for example, in situations where the power quality provided by the renewable power source and the power grid is not sufficient to run the electrolyzers and provide sufficient power for the control system.

Since as noted above, the joint probability for both the renewable energy power source and the power grid to fail at the same time, disclosed embodiments permit reducing the required energy capacity of the backup power supply, and, in certain applications, it is contemplated that the backup power supply can be eliminated. Consequently, disclosed embodiments are conducive to an implementation that permits cost and space savings, compared to designs involving, for example, a high-capacity Uninterruptible Power Supply (UPS) system, as is generally the case in certain known implementations.

Although at least one exemplary embodiment of the present disclosure has been described in detail, those skilled in the art will understand that various changes, substitutions, variations, and improvements disclosed herein may be made without departing from the scope of the disclosure in its broadest form.

None of the description in the present application should be read as implying that any particular element, step, act, or function is an essential element, which must be included in the claim scope. The scope of patented subject matter is defined only by the allowed claims. Moreover, none of these claims are intended to invoke a means plus function claim construction unless the exact words "means for" are followed by a participle.

## Claims

1. A system comprising:
a renewable energy electrical power source (24);
an electrolysis plant (30) comprising a plurality of electrolyzers (32) electrically coupled to the renewable energy electrical power source to energize respective ones of the plurality of electrolyzers in respective operating conditions; and
a control system (40) of the electrolysis plant connected in parallel circuit to the renewable energy electrical power source (24) and to a power grid (20), wherein upon detection of an occurrence of power outage or otherwise insufficient power supply by the renewable energy electrical power source, the control system energized by the power grid, the control system configured to bring the respective ones of the plurality of electrolyzers to respective standby conditions,
wherein the plurality of electrolyzers is electrically coupled to the power grid to energize the respective ones of the plurality of electrolyzers in the respective standby conditions.

2. The system according to claim 1, further comprising a backup power supply (26) electrically coupled to the control system, wherein upon detection of occurrence of concurrent power outages or otherwise insufficient power supply by the renewable energy electrical power source (22) and the power grid (20), the backup power supply configured to energize the control system.

3. The system according to claim 2, wherein the backup power supply is selected from the group consisting of a battery backup power supply, a fuel cell system, and a combination of a battery backup power supply and a fuel cell system.

4. The system according to claim 2 or claim 3, wherein the backup power supply has an energy rating and/or power rating pre-selected to provide a predefined amount of power to the control system over a period of time sufficiently long to bring the respective ones of the plurality of electrolyzers to respective idle conditions.

5. The system according to claim 4, wherein the duration of time for the battery backup power supply is in a range from approximately 7 minutes to approximately 15 minutes.

6. The system according to any of the preceding claims, further comprising a DC power bus(50) electrically powered by the renewable-based electrical power source, the DC bus connected to supply DC power to respective DC to DC power converters (52) configured to energize the respective ones of the plurality of electrolyzers in the respective operating conditions.

7. The system according to claim 6, further comprising an AC to DC power converter (54) connected to receive AC power from the power grid, wherein the DC power bus is connected to receive DC output power from the AC to DC power converter to energize the respective ones of the plurality of electrolyzers in the respective standby conditions in the event of the power outage or the otherwise insufficient power supply in the renewable energy electrical power source.

8. The system according to claim 7, wherein the control system (40) is connected to receive AC power from the power grid (20) in the event of the power outage or otherwise the insufficient power supply in the renewable energy electrical power source.

9. The system according to claim 1, wherein the renewable energy electrical power source is a wind turbine system.

10. The system according to claim 9, wherein the wind turbine system includes an AC power generator, wherein the control system is connected to receive AC power from the AC power generator.

11. The system according to claim 10, wherein one of the wind turbine system and an electrolyzer power supply system further includes an AC to DC power converter (25) connected to receive AC power from the AC power generator, wherein a DC power bus is connected to receive DC output power from the AC to DC power converter.

12. The system according to any claims from claim 1 through claim 8, wherein the renewable energy electrical power source is a solar photovoltaic system.

13. The system according to any claims from claim 1 through claim 8, wherein the renewable energy electrical power source is selected from the group consisting of a wind turbine system, a solar photovoltaic system and a hybrid renewable energy electrical power source including a wind turbine system and a solar photovoltaic system or any other non-fossil-fuel based power system.

14. The system according to claim 10, further comprising an AC bus connected to receive power from the AC power generator (25), a plurality of power rectifiers connected to receive power from the AC bus and in turn energize the electrolyzers.

15. The system according to claim 1, wherein the power grid (20) is a weak power grid compared to the power requirements involved to operate the electrolysis plant.

16. A hydrogen production plant comprising the system connected to the power grid according to any of the preceding claims.

17. A method comprising:
electrically coupling an electrolysis plant (30) comprising a plurality of electrolyzers (32) to a renewable energy electrical power source (22) to energize respective ones of the plurality of electrolyzers in respective operating conditions;
connecting a control system (40) of the electrolysis plant in parallel circuit to the renewable energy electrical power source (22) and to a power grid (20);
detecting occurrence of a power outage or otherwise insufficient power supply by the renewable energy electrical power source;
upon detecting the occurrence of the power outage or the otherwise insufficient power supply by the renewable energy electrical power source, energizing with the power grid the control system and controlling, by way of the control system, the respective ones of the plurality of electrolyzers to be brought to respective standby conditions; and
electrically coupling the plurality of electrolyzers to the power grid to energize the respective ones of the plurality of electrolyzers in the respective standby conditions.

18. The method of claim 17, further comprising:
electrically coupling a backup power supply (26) to the control system;
detecting occurrence of concurrent power outages or otherwise concurrent insufficient power supply by the renewable energy electrical power source and the power grid; and
upon detecting the occurrence of the concurrent power outages or the otherwise concurrent insufficient power supply by the renewable energy electrical power source and the power grid, energizing, by way of the backup power supply, the control system.

19. The method of claim 18, pre-selecting an energy rating and/or power rating of the backup power supply to provide a predefined amount of power to the control system over a period of time sufficiently long to bring the respective ones of the plurality of electrolyzers to respective idle conditions.

20. The method according to claim 19, wherein the backup power supply is a battery backup power supply and the period of time is in a range from approximately 7 minutes to approximately 15 minutes.

21. The method according to claim 18,
wherein a joint probability of occurrence of concurrent power outages or otherwise concurrent insufficient power supply by the renewable energy electrical power source and the power grid has a lower value relative to a first probability associated with an individual occurrence of a power outage or otherwise insufficient power supply by the renewable energy electrical power or a second probability associated with an individual occurrence of a power outage or otherwise insufficient power supply by the power grid, and
wherein the lower value of the joint probability of occurrence of concurrent power outages or otherwise concurrent insufficient power supply by the renewable energy electrical power source and the power grid permits choosing the backup power supply with a lower energy rating and/or power rating compared to an energy rating and/or power rating that otherwise would be involved to account for the higher first probability associated with the individual occurrence of a power outage or otherwise concurrent insufficient power supply by the renewable energy electrical power or the higher second probability associated with the individual occurrence of a power outage or otherwise insufficient power supply by the power grid.
